# EUROPEAN PATENT SPECIFICATION

(11) **EP 2 415 298 B1**
(45) Date of publication and mention of the grant of the patent: **20.05.2015**
(21) Application number: 09788518.0
(22) Date of filing: 31.03.2009
(51) Int. Cl.: H04W 24/02

(54) **METHODS AND DEVICES FOR PERFORMING A SERVICE PROCESS IN A COMMUNICATION DEVICE**
VERFAHREN UND EINRICHTUNGEN ZUM AUSFÜHREN EINES DIENSTPROZESSES IN EINER KOMMUNIKATIONSEINRICHTUNG
PROCÉDÉS ET DISPOSITIFS POUR METTRE EN OEUVRE UN PROCESSUS DE SERVICE DANS UN DISPOSITIF DE COMMUNICATIONS

(43) Date of publication of application: 08.02.2012
(73) Proprietor: Telefonaktiebolaget LM Ericsson (publ), 164 83 Stockholm (SE)
(72) Inventor: ÖSTRUP, Peter, S-587 50 Linköping (SE); HEDENSTRÖM, Magnus, S-581 12 Linköping (SE); ABRAHAMSSON, Björn, S-582 25 Linköping (SE); WIBECK, Johan, S-583 27 Linköping (SE); JOHANSSON, Anders, S-587 21 Linköping (SE); SWÄRD, Sara, S-584 37 Linköping (SE); SANDBERG, Pontus, S-582 20 Linköping (SE); WESTLING, Johan, S-58247 Linköping (SE)
(74) Representative: Kühn, Friedrich Heinrich
(86) International application number: PCT/SE2009/050337
(87) International publication number: WO 2010/114436

(56) References cited:
- EP-A1- 1 631 110
- US-A1- 2004 253 956
- US-A1- 2005 208 944

## Description

### TECHNICAL FIELD

Embodiments herein relate to methods and devices in a communications network, in particular, for performing a service process of a communication device.

### BACKGROUND

Today, communications nodes within a communications network such as Long Term evolution (LTE), Wideband Code Division Multiple Access (WCDMA), Global System for Mobile communications (GSM) and or the like comprises functions, software programs, operation system and/or the like performing functions/processes and the like in the network. Some services are continuously updated, such as software programs, functions and/or the like. For example, a Software (SW) Upgrade of a Radio Access Network (RAN) may be performed from an Operations Support System (OSS). As these updates require processor capacity as well as some services/functions need to be paused during such updates, the OSS will schedule the SW Upgrade in each radio base station (RBS) of the RAN in a particular pre-determined order in an attempt to avoid large traffic disturbances. For example, US2005208944 A1 describes how software in a base station is upgraded during a communication service.

### SUMMARY

It is an object of embodiments herein to provide an efficient way to perform a service process of a communication device that requires the communication device to be brought out of operation/into limited operation.

In some embodiments, a method in a service communication device comprising an Operations Support System, OSS, or an Operation and Maintenance, OAM, system, for performing a service process in a Radio Base Station, RBS, within a radio access network requiring that the RBS is brought out of operation/into limited operation, the OSS or OAM having a predetermined upgrade area comprising an area with a number of RBSs in which the service process is to be performed, is disclosed. The service communication device receives information pertaining to at least one neighbouring RBS within the radio access network indicating an actual load of at least one neighbouring RBS, then determines to perform the service process of the RBS within the radio access network based on the actual load of at least one neighbouring RBS within the radio access network. The service communication device then performs the service process of the RBS.

In some embodiments, a service communication device is provided to perform the method. The service communication device comprises an Operations Support System, OSS, or an Operation and Maintenance, OAM, system having a predetermined upgrade area comprising an area with a number of RBSs in which a service process is to be performed, comprising a control unit (101) arranged to perform the service process of a RBS within a radio access network. The service process requires the RBS to be brought out of operation/into limited operation during the service process. The service communication device is arranged to receive information pertaining to at least one neighbouring RBS within the radio access network indicating an actual load of at least one neighbouring RBS and is further arranged to determine and perform the service process in the RBS based on the actual load of at least one neighbouring RBS within the radio access network.

In some embodiments, a method in a Radio Base Station, RBS, within a radio access network is disclosed. The method comprises determining whether to perform a service process of the RBS from a service communication device comprising an Operations Support System, OSS, or an Operation and Maintenance, OAM, system, based on actual load of at least one neighbouring RBS within the radio access network; the service process requiring the RBS to be brought out of operation/into limited operation, and requesting an initiation of the service process from a service communication device when the actual load is below a first preset level.

In some embodiments, a Radio Base Station is provided to perform the method. The Radio Base Station comprises a control unit (201) arranged to determine whether to perform a service process of the RBS from a service communication device comprising an Operations Support System, OSS, or an Operation and Maintenance, OAM, system. The service process requires the RBS to be bought out of operation/into limited operation. The radio base station is characterised in that the control unit (201) is arranged to base the determination on actual load of at least one neighbouring RBS within a radio access network and to request an initiation of the service process from a service communication device when the actual load is below a first preset level.

The basic concept of embodiments herein is to take the current traffic situation/load of at least one communication device, such as a base station node, within a Radio Access Network into consideration when a service process is to be performed. This is done, in some examples by passing a service token from a service communication device, such as an OSS node, to one or more communication devices.

A communication device holding a service token may initiate a negotiation process towards neighbouring communication devices before either initiating the service process or passing the service token to another communication device.

Embodiments herein provide an efficient way to perform a service process of a communication device within a radio access network requiring that the communication device is brought out of operation/into limited operation.

### BRIEF DESCRIPTION OF THE DRAWINGS

Embodiments will now be described in more detail in relation to the enclosed drawings, in which:
Figure 1 shows a schematic overview of a communications network,
Figures 2a-2c shows schematic overviews of examples of X2 packets in a communications network,
Figure 3 shows a schematic combined method and signalling scheme in a communications network,
Figure 4 shows a schematic combined method and signalling scheme in a communications network,
Figure 5 shows a schematic combined method and signalling scheme in a communications network,
Figure 6 shows examples of possible state and state transitions in a communication device,
Figure 7 shows examples of possible state and state transitions in a communication device during a negotiation process,
Figure 8 shows a schematic overview of a flow chart of a method in a service communication device,
Figure 9 shows a schematic overview of a flow chart of a method in a service communication device,
Figure 10 shows a schematic overview of a service communication device,
Figure 11 shows a schematic overview of a flow chart of a method in a communication device,
Figure 12 shows a schematic overview of a flow chart of a method in a communication device,
Figure 13 shows a schematic overview of a communication device, and
Figure 14 shows a schematic flow chart of a method in a communication device.

### DETAILED DESCRIPTION

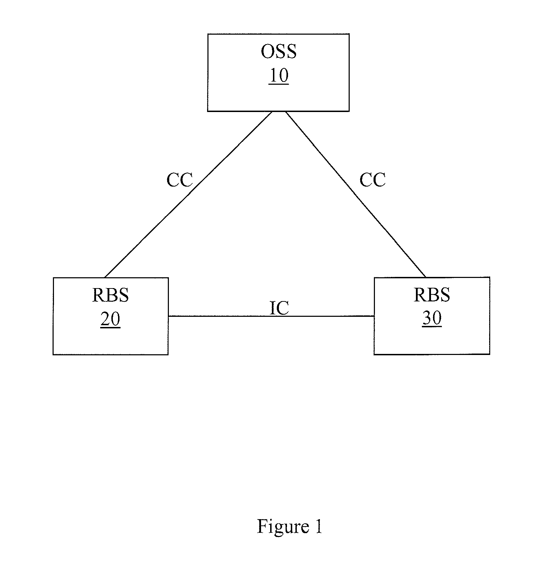

In figure 1, a schematic overview of a communications network is shown. Examples are disclosed wherein traffic disturbances at, for example, a Software Upgrade of the Radio Access Network (RAN) is avoided by taking the current traffic situation of each or at least one communication device, such as a base station node, into consideration. In the illustrated examples, the service process is a software upgrade process. However, the service process may be any service process requiring that the communication device is brought out of operation/into limited operation.

A service communication device, in the illustrated example an OSS 10 node, is configured to update software of each base station eNB 20, eNB 30 in a radio access network. The OSS 10 has a predetermined upgrade area comprising an area with a number of eNBs in which software updates should be performed. The software update should be performed within the area and the OSS 10 sends out a message indicating the upgrade area over a core connection/s (CC), such as an S1 connection. Then, each base station eNB 20, eNB 30 receives the indication of the upgrade area and determines if the eNB is a part of the upgrade area and, hence, whether an upgrade is to be performed of the eNB.

The OSS 10 then transmits an upgrade token to the eNB 20 indicating that an upgrade of the software is to be performed. The eNB 20 may then, based on actual load of the eNB 20, request the upgrade to be performed, or perform a negotiation process toward a neighbouring eNB 30 over an inter-node connection (IC) to determine the actual load of the neighbouring eNB 30 as well. In this manner, the eNB 20 may consider not only the actual load of the eNB 20 but also consider actual load of neighbouring base stations. The eNB 20 may also reject the upgrade token based on actual load of the eNB20. The eNb 20 may be able to keep the token for a while, for example, until the actual load decreases and as long as the Time sent from OSS indicates that the upgrade token is valid, a preset time and/or the like, before starting upgrade or negotiation.

Hence, the order to initiate a service process or not from the OSS 10 that brings each base station eNB 20, 30 out of service or limits the service of the eNB 20 may be based on actual load of eNBs, for example, whether eNB 20 is currently handling many users or similar and/or if the base station/s eNB 30 surrounding the eNB 20 is experiencing high load.

The actual load may be defined according to different levels. For example, four load levels for a base station eNB 20, 30 may be defined and result in different measures:
Low Load: the base station may start an upgrade preparation and execution without performing an upgrade negotiation process,
Medium Load: the base station may start an upgrade preparation and execution after a successful upgrade negotiation has been performed,
High Load: upgrade negotiation is not started by the base station but an upgrade negotiation request from another base station is accepted and responded to,
Extreme Load: upgrade negotiation is not started by the base station and an upgrade negotiation request from another base station is rejected.

The load may be calculated during a specified time window, hence, avoiding load spikes when an eNB is evaluating its (current) actual load.

Hence, the base station behaves differently when receiving an upgrade token/or taken part of an upgrade negotiation process based on the present actual load of the base station.

Examples show the following new inter-node connection messages; for example, X2 messages:
- Upgrade Negotiation Request (UNReq) comprising information indicating, for example,
   - SW version
   - Upgrade Area Identity
- Upgrade Negotiation Response (UNResp) comprising information indicating, for example,
   - (Current) Actual Load Level
   - UpgradeToken Requested/Not requested
   - Upgrade Negotiation Result (OK to proceed/Not OK to proceed)
- Pass Upgrade Token Request (PassUTReq) comprising information indicating, for example,
   - UpgradeToken (identity, validity time and SW version)
- Pass Upgrade Token Response (PassUTResp) comprising information indicating, for example,
   - UpgradeToken (optional).

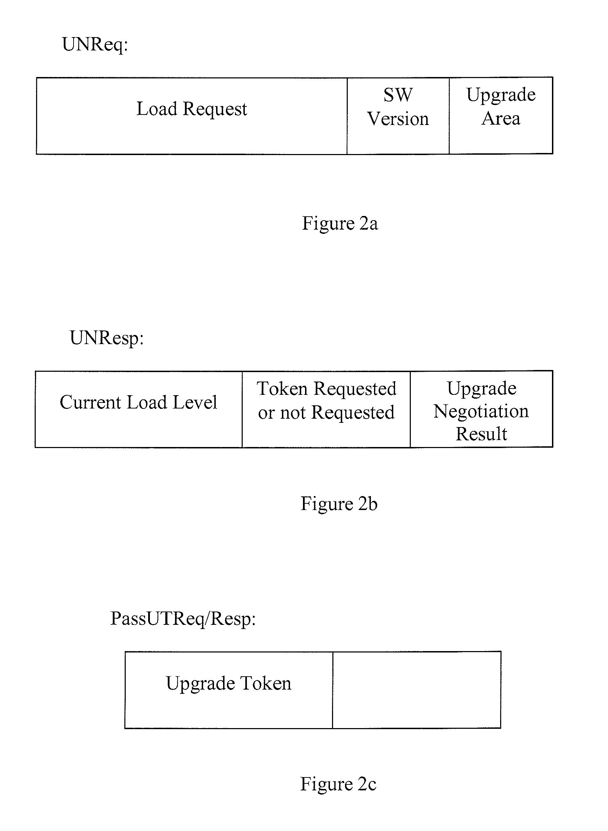

In figure 2a, a schematic overview of an X2 packet comprising an Upgrade Negotiation Request (UNReq) is shown. The packet comprises a load request requesting the current actual load of the communication device; a software version field indicating the version of the software; and an upgrade area field indicating the upgrade area.

In figure 2b, a schematic overview of an X2 packet comprising an Upgrade Negotiation Response is shown. The packet comprises a current actual load field indicating current actual load of the responding communication device, token requested/not requested field indicating whether the responding communication device requests the upgrade token or not, and an Upgrade Negotiation Result field indicating whether to proceed the negotiation process or not.

In figure 2c, a schematic overview of an X2 packet comprising a Pass Upgrade Token Request/Response is shown. The packet may comprise an upgrade token field comprising the upgrade token, and/or more information. The upgrade token comprises, for example, service identity, validity time, version identity and/or the like.

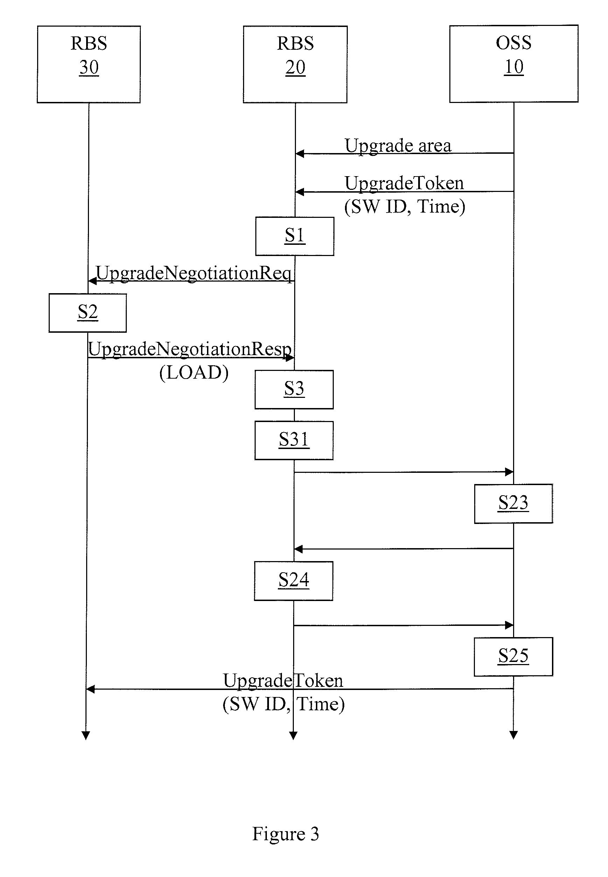

In figure 3, a schematic combined method and signalling scheme is shown.

First, an OSS node 10 broadcasts information/data that a software upgrade process is to be performed. The OSS node 10 transmits data comprising an indication of an upgrade area indicating the area to take part of the upgrading of software and a service token (an upgrade token) indicating, for example, service identity, validity time and software version.

In step S1, a base station RBS 20 receives the transmitted data from the OSS node 10 and determines whether the RBS 20 is within the upgrade area, already comprises the version of the software (SW ID), upgrade is still valid (Time) and/or the like. In the case it is determined that an upgrade is valid and that the RBS 20 is within the upgrade area and an upgrade is to be performed, the actual load of the RBS 20 is determined. The RBS 20 then either starts upgrade preparation and execution or starts upgrade negotiation towards all its neighbouring RBSs based on the actual load of the RBS 20. The RBS 20 may also reject the upgrade token if the actual load in RBS 20 is over a preset load level. In some examples, the RBS 20, being the first RBS of an Upgrade sequence of RBSs, has got heavy load and the RBS 20 will cause the entire Upgrade sequence to be terminated. However, by introducing a first RBS flag or some sequence number in an Upgrade Negotiation Request message this may be avoided.

In the illustrated example, the RBS 20 determines that an upgrade negotiation process is to be initiated. This may be the case when the actual load in the RBS is determined to be a medium load. Thus, the RBS 20 then transmits an upgrade negotiation request to a neighbouring base station RBS 30 to determine if a neighbouring base station is more suitable to have the upgrade performed on it and/or if a neighbouring base station is under heavy load. If the RBS 30 is under heavy load then the RBS 20 may not be able to perform the upgrade process since the RBS 20 may not be able to re-direct/release UEs to the neighbouring RBS 30 during the upgrade preparation and execution and/or should be ready to receive hand over requests from the neighbouring RBS 30. Therefore, the RBS 20 may reject the upgrade token when the neighbouring RBS 30 is under heavy load.

In step S2, the RBS 30 receives the upgrade negotiation request and determines an actual load of RBS 30. The actual load could take into consideration component load, cell load and/or the like, for example, number of user equipments (UEs) in connected mode, number of UEs having transferred user plane data during the past `t' seconds, processor load, and/or the like. The RBS 30 then transmits an upgrade negotiation response to the RBS 20 comprising e.g. an indication of the determined actual load (LOAD).

In step S3, the RBS 20 receives the upgrade negotiation response and reads the actual load of the neighbouring RBS 30. The RBS 20 then compares the received actual load with the local determined actual load of the RBS 20. In the illustrated example, the comparison results in that the RBS 20 determines that the actual load in the RBS 20 is equal to or lower than the actual load in the neighbouring RBS 30 and based on that the RBS 20 determines to request the upgrade process to be initiated and performed.

In step S31, the RBS 20 performs a process to enable the upgrade process to be performed by initiating Upgrade preparation and execution through re-directing/releasing subscribers with an appropriate algorithm. When all connected mode and idle mode UEs have been re-directed/released, the upgrade token is returned to OSS 10, and the new SW version is requested from the OSS 10.

The upgrade token may also be returned after a successful upgrade has been performed. This does, however, imply that the node may either start the upgrade on its own (then it knows the remote location of the new SW) or trigger the OSS 10 to start the upgrade without returning the token.

In step S23, the OSS 10 receives the upgrade token along with the request for the update process to be performed. Thus, the OSS 10 determines that the upgrade process should be performed on the RBS 20. The OSS 10 then executes the upgrade process and transmits the new version to the RBS 20.

In step S24, the RBS 20 then receives the new version and the upgrade execution is performed between the OSS 10 and the RBS 20.

The RBS 20 then confirms that it has been upgraded to the OSS 10.

In step S25, the OSS 10 has finished the SW Upgrade of the RBS 20, and the OSS 10 determines whether a second RBS 30 has been upgraded or not. In the case the RBS 30 has not been upgraded with the new version, the upgrade token is transmitted to the RBS 30.

It should be understood that step S31 may alternatively be performed just before the upgrade execution (step S24) is performed.

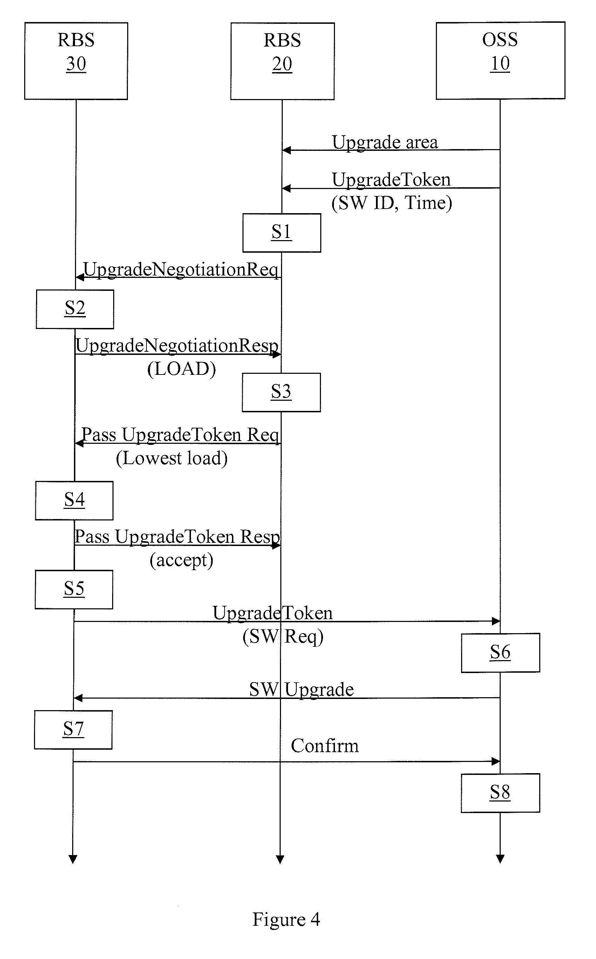

In figure 4, a schematic combined method and signalling scheme in a communications network is shown.

First, an OSS node 10 broadcasts information/data that a software upgrade process is to be performed. The OSS node 10 transmits data comprising an upgrade area indicating the area to be upgraded and a service token, an upgrade token, indicating, for example, identity, validity time and Software version.

In step S1, a base station RBS 20 receives the transmitted data from the OSS node 10 and determines whether the RBS 20 is within the upgrade area, already comprises the version of the software (SW ID), upgrade is still valid (Time) and/or the like. In the case it is determined that an upgrade is valid, the RBS 20 is within the upgrade area and an upgrade is to be performed, the actual load of the RBS 20 is determined. The RBS 20 then either starts upgrade preparation and execution or starts upgrade negotiation towards all its neighbouring RBSs based on the actual load of the RBS 20.

In the illustrated example, the RBS 20 determines that an upgrade negotiation process is to be initiated. This may be based on that the actual load of the RBS 20 is determined to be a medium load. Thus, the RBS 20 may then transmit an upgrade negotiation request to a neighbouring base station RBS 30 to determine if a neighbouring base station is more suitable to have the upgrade performed on it and/or if a neighbouring base station is under heavy load. If the RBS 30 is under heavy load then the RBS 20 may not be able to perform the upgrade process since the RBS 20 may not be able to re-direct/release UEs to the neighbouring RBS 30 during the upgrade preparation and execution and/or should be ready to receive hand over requests from the neighbouring RBS 30. Therefore, the RBS 20 may reject the upgrade token based on whether the neighbouring RBS 30 is under heavy load.

In step S2, the RBS 30 receives the upgrade negotiation request and determines an actual load of RBS 30. The actual load could take into consideration, for example, number of UEs in connected mode, number of UEs having transferred user plane data during the past `t' seconds, processor load, and/or the like. The RBS 30 then transmits an upgrade negotiation response to the RBS 20 comprising an indication of the determined actual load (LOAD).

In step S3, the RBS 20 receives the upgrade negotiation response and reads the actual load of the neighbouring RBS 30. The RBS 20 then compares the received actual load of the local determined actual load. In the illustrated example, the comparison results in that the RBS 20 determines that the actual load in the RBS 20 is higher than the actual load in the neighbouring RBS 30. Since the RBS 20 that initiated the upgrade negotiation does not have the lowest load level, the RBS 20 passes the upgrade token to the RBS 30 with the lowest load level by sending a Pass Upgrade Token Request X2 message.

The RBS 20 transmits the request message over an inter-node connection, being an X2 connection, to the RBS 30 for indicating that the RBS 20 wants to pass the upgrade token.

In step S4, the RBS 30 receives the pass upgrade token request and initiates upgrade negotiation towards all its neighbouring RBSs, the RBS 30 may in order for this to happen have a medium load. At this point, if the RBS 30 holding the upgrade token has completed upgrade negotiation successfully towards all its neighbouring RBSs, the RBS 30 sends a pass upgrade token response message indicating that the upgrade token has been accepted to the RBS 20.

It should be noted that, in the examples wherein a neighbouring RBS to RBS 30 rejects the negotiation, the upgrade token may be sent back to RBS 20; a rejection to the request may also/alternatively be sent.

In step S5, the RBS 30 performs a process to enable the upgrade process to be performed by initiating Upgrade preparation and execution through re-directing/releasing UEs with an appropriate algorithm. When all connected mode and idle mode UEs have been re-directed/released, the upgrade token is returned to the OSS 10, and the new SW version is requested from the OSS 10.

In step S6, the OSS 10 receives the upgrade token and the request, initiates and transmits the Software upgrade.

In step S7, the RBS 30 then receives the upgraded version and the upgrade execution is performed between the OSS 10 and the RBS 30.

The RBS 30 then confirms that it has been upgraded successfully to the OSS 10.

In step S8, the OSS 10 has finished the SW Upgrade of the RBS 30, and the OSS 10 determines whether another RBS should be upgraded or not.

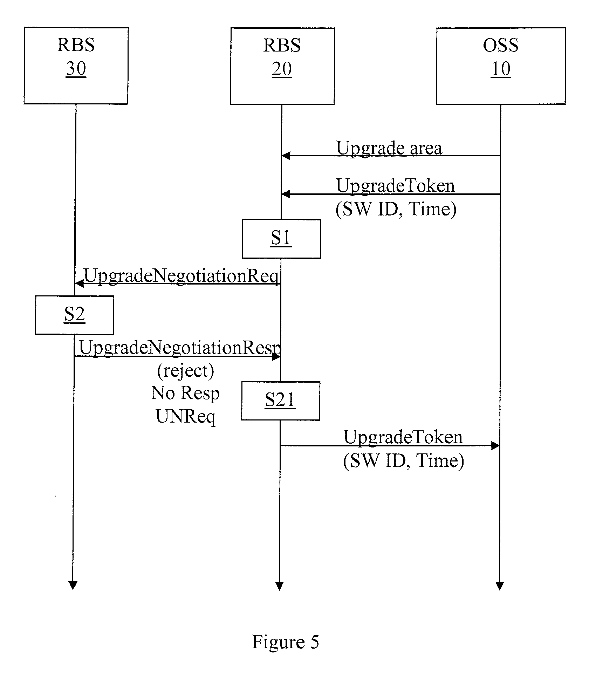

In figure 5, a schematic combined method and signalling scheme in a communications network is shown.

First, an OSS node 10 broadcasts information/data that a software upgrade process is to be performed. The OSS node 10 transmits data comprising an upgrade area indicating the area to be upgraded and a service token, an upgrade token, indicating, for example, identity, validity time and Software version.

In step S1, a base station RBS 20 receives the transmitted data from the OSS node 10 and determines whether the RBS 20 is within the upgrade area, already comprises the version of the software (SW ID), upgrade is still valid (Time) and/or the like. In the case it is determined that an upgrade is valid, the RBS 20 is within the upgrade area, that the RBS 20 does not comprise the version (or a more recent version) of the software and an upgrade is to be performed, the actual load of the RBS 20 is determined. The RBS 20 then either starts upgrade preparation and execution (load being Low) or starts upgrade negotiation (load being between Low and High) towards all its neighbouring RBSs based on the actual load of the RBS 20.

In the illustrated example, the RBS 20 determines that an upgrade negotiation process is to be initiated. This may be based on that the actual load of the RBS is determined to be a medium load. Thus, the RBS 20 may then transmit an upgrade negotiation request to a neighbouring base station RBS 30 to determine if a neighbouring base station is more suitable to have the upgrade performed on it and/or if a neighbouring base station is under heavy load. If the RBS 30 is under heavy load then the RBS 20 may not be able to perform the upgrade process since the RBS 20 may not be able to re-direct/release UEs to the neighbouring RBS 30 during the upgrade preparation and execution and/or should be ready to receive hand over requests from the neighbouring RBS 30. Therefore, the RBS 20 may reject the upgrade token when the neighbouring RBS 30 is under heavy load.

In step S2, the RBS 30 receives the upgrade negotiation request and determines an actual load of the RBS 30. In the illustrated example, the RBS 30 rejects the upgrade negotiation request, either by returning a rejection indication in an upgrade negotiation response e.g. if its previous upgrade negotiation was unsuccessful, being under extreme load and/or the like. The RBS 30 may also reject the request by not responding.

In step S21, the RBS 20 receives the rejection and returns the UpgradeToken to the OSS 10 immediately.

An alternative may be where the RBS 20 that initiated the negotiation waits a while and performs a new negotiation a number of times (until the upgrade token validity Time received from the OSS 10 has passed).

An UpgradeToken may also be returned to the OSS 10 when a neighbouring RBS does not respond to the Upgrade Negotiation Request message, since a non-responsive RBS can not uphold service for the UEs to be re-directed/released during the upgrade preparation and execution.

Conclusively, if the RBS 30 is under heavy load/non responsive then the RBS 20 may not be able to perform the upgrade process since the RBS 20 may not be able to redirect/release UEs to the neighbouring RBS 30 during the upgrade preparation and execution and/or should be ready to receive hand over requests from the neighbouring RBS 30. Therefore, the RBS 20 should return and reject the upgrade token when the neighbouring RBS 30 is under heavy load.

In some examples, the RBS 20 may during the valid time of the upgrade token continue to send an upgrade negotiation request a number of times as long as the upgrade token is valid.

There are a lot of possible algorithms for the participating nodes to perform when taking part of an updating procedure.

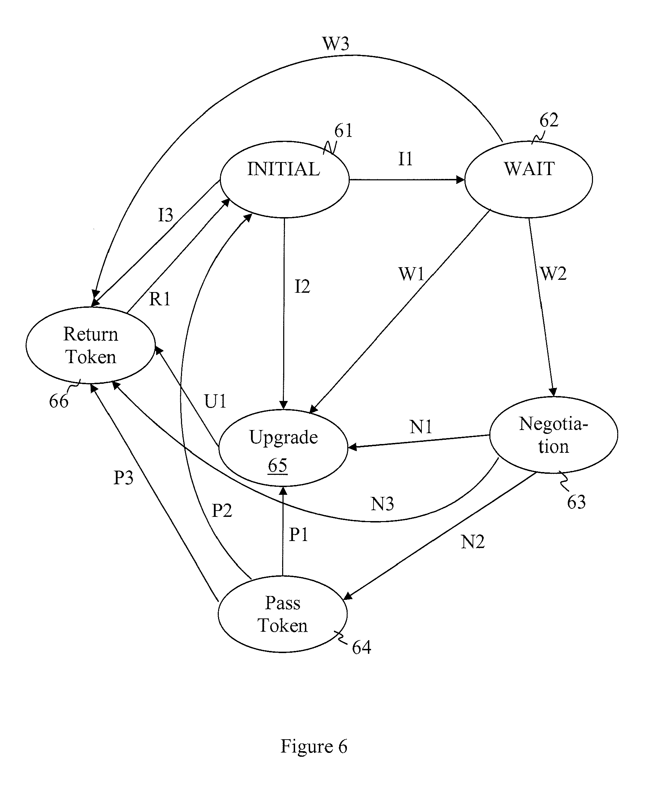

In figure 6, a diagram outlines exemplary states and the state transitions that an RBS can go through when receiving an UpgradeToken.

Also note that the OSS may still have the possibility to circumvent the present procedure and initiate a SW Upgrade of an RBS without even sending an UpgradeToken.

When an SW Upgrade of the RAN is to take place, the OSS may notify all RBSs of the RAN if they are part of an Upgrade Area or not in advance of sending an UpgradeToken to any RBS.

The SW Upgrade of the RAN is initiated by the OSS through sending of an UpgradeToken to one or more RBSs. The UpgradeToken may be accompanied by the identity of the SW version being offered and an indication of for how long time that the UpgradeToken is valid.

The receiving RBS may be set in a number of states, indicated in the figure 6 as Initial state 61, Wait state 62, Negotiation state 63, PassToken state 64, Upgrade state 65, and Returntoken state 66 based on actual load of the RBS itself and neighbouring RBSs. First the RBS is set in an initial state 61 and receives a token.

The RBS may then transit to the wait state 62 if the actual load is higher than low and lower than extreme, denoted as 11.

The RBS may transit to upgrade state 65 if the actual load is low, denoted as I2.

The RBS may transit to returnToken state 66 if the actual load is extreme, the software version is already upgraded, or the RBS is not within the upgrade area; denoted as I3.

When the RBS is in the Wait state 62, the RBS may transit to a different state.

The RBS may transit to the upgrade state if the actual load changes to a low actual load; denoted as W1.

The RBS may transit to Negotiation state 63 if the actual load is between low and extreme during a preset time, denoted as W2.

The RBS may transit to Returntoken state 66 if the actual load changes to extreme during the wait state 62, denoted as W3.

When the RBS is in a Negotiation state 63 the RBS perform a negotiation process with neighbouring RBSs and receives responses from the neighbouring RBSs and may then transit to a different state.

The RBS may transit to the upgrade state 65 if the RBS has received responses from all neighbouring RBS and all responses were positive responses and has the lowest actual load, denoted as N1.

The RBS may transit to the PassToken state 64 if the RBS has in the last responses from the neighbouring RBS received positive responses (no rejections and no non-responses) and one neighbouring RBS has the lowest actual load, denoted as N2. It should also be noted that the transition may occur when some (not all) positive responses has been received.

The RBS may transit to the Returntoken state 66 if the RBS received none positive responses in the last responses from the neighbouring RBSs, denoted as N3.

When the RBS is in a PassToken state 64 the RBS may transit to a different state.

The RBS may transit to upgrade state 65 if the upgrade token was returned in the pass token response and all neighbour RBS gave a positive response in the negotiation performed just before the token was passed.

The RBS may transit to Initial state 61 when the passing of the token has been performed successfully receiving a positive pass token response, denoted as P2.

The RBS may transit to ReturnToken state 66 if the upgrade token was returned in the pass token response and all neighbour RBS did not give a positive response in the negotiation performed just before the token was passed.

When the RBS is in an Upgrade state 65 the RBS may transit to a different state.

The RBS may transit to the ReturnToken state 66 when the upgrade is completed, denoted as U1.

When the RBS is in a ReturnToken state 66 the RBS may transit to a different state.

The RBS may transit to the Initial state 61 when the token is returned, denoted as R1.

It should be understood that there are several possible alternative states and causes to transition between states and this is merely an example.

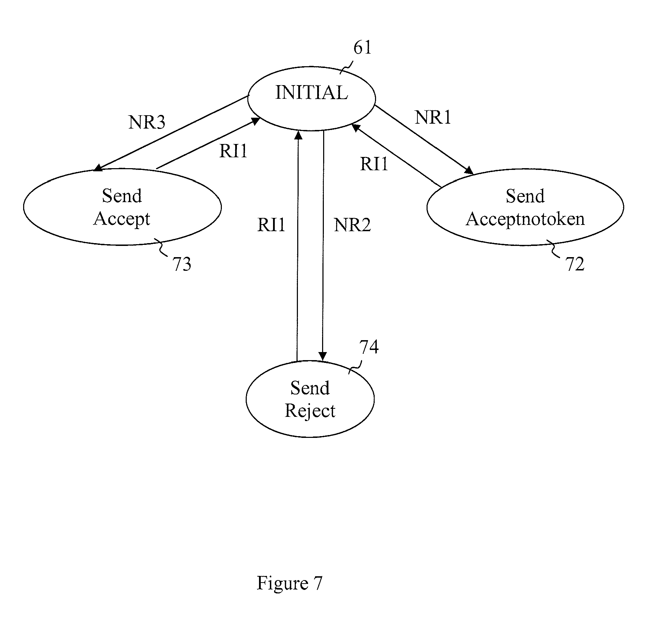

In figure 7, a schematic diagram that outlines exemplary states and the state transitions that an RBS can go through receiving a request during a Negotiation process is shown.

The RBS may be in an Initial state 61, a SendAcceptNoToken state 72, a SendReject state 73 and a SendAccept state 74.

First, the RBS is in the Initial state 61 and the RBS may transit to a different state.

The RBS may transit to the SendAcceptNoToken state 72 when the actual load in the RBS is low or medium but the RBS is not in the upgrade area or the software version is already installed or is a version previous the installed version; denoted as NR1.

Being in the SendAcceptNoToken state 72 the RBS sends a Negotiation Response comprising different indications such as accept=true, load=x-value, tokenOK=false and/or the like. The tokenOK is set to false since the RBS is not in the upgrade area or the software version is already installed or is a version previous the installed version

The RBS may furthermore transit to the SendReject state 73 when the actual load is high or extreme; denoted as NR2.

Being in the SendReject state 73 the RBS sends a Negotiation Response where an indication is set to Accept=false indicating the rejection.

The RBS may further transit to the SendAccept state 74 when the actual load is low or medium and the RBS is within the upgrade area and comprises a software version previous the upgrade version, denoted as NR3.

Being in the SendAccept state the RBS sends a Negotiation Response where indications may be set as accept=true, load=x-value, tokenOK=true and/or the like.

After the RBS sends a Negotiation Response it returns to the Initial State 61; denoted as RI1.

Referring back to some examples herein, when a base station that receives the token from an Operation and Maintenance (OAM) system, the service token is a request to perform the service process. First, the token is received at the base station and it is up to the "token holding" node to decide if it wants to pass the token or not based on the replies from negotiation and other internal policies to "subsequent" communication device.

As an example, in a negotiation process, there is one base station holding the token and one or more other base stations that respond if they would like the token or not and if they are ok or not ok with that the device that started the negotiation continues with the service process. In a pass the token process, the token may be passed to any of the nodes that, during negotiation, said that they would like the token. If the token is sent, the token could still be received back again, since the base station that received the token may have commenced another negotiation process and might be stopped by a neighbour base station from performing the service process.

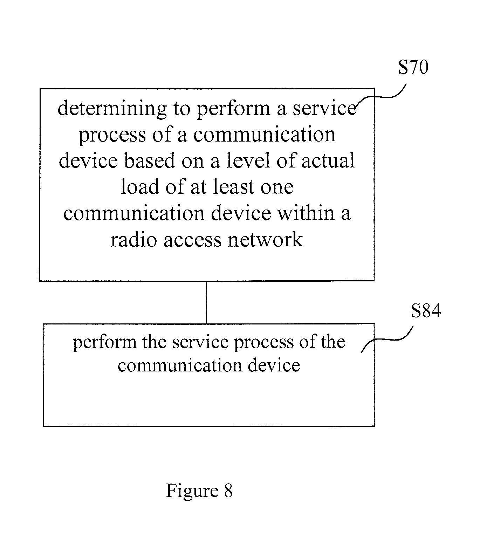

In figure 8, a schematic overview of a method in a service communication device is shown.

The method is for performing a service process of a communication device within a radio access network requiring that the communication device is brought out of operation/into limited operation. Such a service process may comprise a software upgrade, adding new software and functions to the communication device and/or the like.

In step S70, the service communication device determines to perform the service process of the communication device within the radio access network based on an actual load of at least one communication device within the radio access network.

For example, the service communication device retrieves/receives information of at least one communication device within the radio access network indicating an actual load of the at least one communication device, such as a request to initiate the service process based on actual load of the requesting communication device and/or the like.

In step S84, the service communication device performs the service process of the communication device.

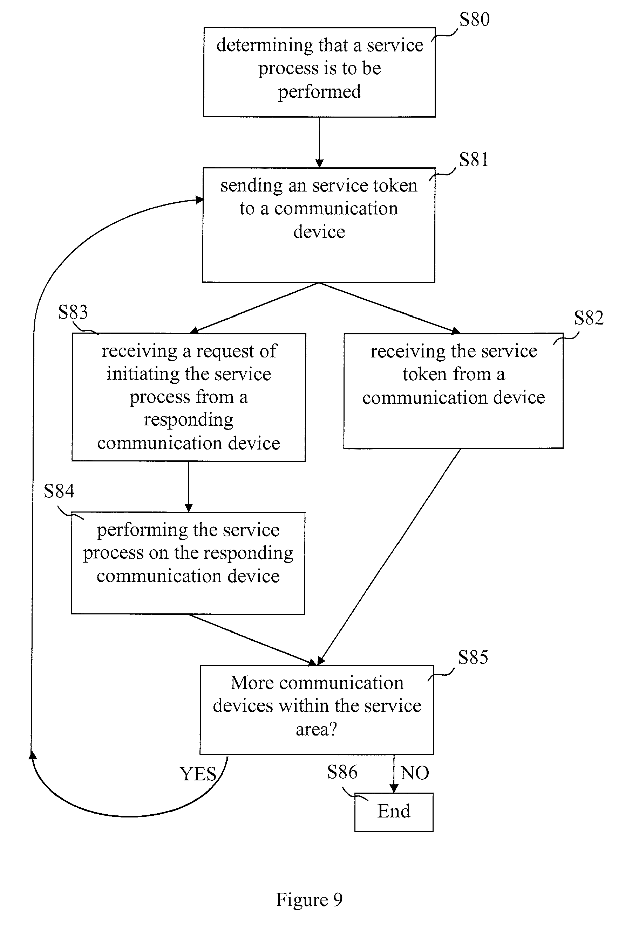

In figure 9, a schematic overview of a method in a service communication device is shown. A service communication device may comprise an Operation Support System (OSS) node, an Operation and Maintenance (OAM) node, and/or the like.

The method is for performing a service process of a communication device within a radio access network requiring that the communication device is brought out of operation/into limited operation. Such a service process may comprise a software upgrade, adding new software and functions to the communication device and/or the like.

The service communication device determines to perform the service process of the communication device within the radio access network based on an actual load of at least one communication device within the radio access network. The service communication device decides to perform the service process or not based on the actual load of the communication device and/or a neighbouring communication device. The communication devices within the radio access network thus determine and initiate the service process to be performed on the communication devices. The communication devices comprises for example, base stations, base station controllers, and/or the like.

Examples are described in reference to the steps in figure 9. In step S80, the service communication device determines that the service process is to be performed. This may be manually ordered, an order transmitted to the service communication device and/or the like. A service area may here be determined in which the service process should be performed. This area may be manually inputted/sent to/predefined in the service communication device and indicated (in the order) as a location area, cell identities and/or the like.

In step S81, the service communication device transmits a service token to a communication device. The service token may be broadcasted, multicasted, unicasted in a radio access network randomly, to a communication device in the service area, and/or the like.

The service token may comprise an identity of a version being offered, indication of how long the token is valid, service area indication and/or the like.

In step S82, the service communication device receives a message comprising the service token from a responding communication device. The message may also indicate the identity of the responding communication device. It should here be noted that the responding communication device may be the communication device the service communication device transmitted the service token to or may be a different communication device. As the service token is returned without being accompanied by a request requesting the service process to be performed from the responding communication device, the service communication device may consider the returned token as a rejection. It should here be understood that any message that indicates a rejection may be used to indicate the rejection of the service token.

In step S85, the service communication device then determines whether more communication devices exist within the service area that need to be service processed. If there is still communication devices left to be processed, the method returns to step S81 and sends a service token to the next communication device. If, however, no more communication devices exist, the service process is considered ended, denoted as S86.

In step S83, the service communication device receives a request requesting to initiate the service process from a responding communication device. The service communication device also receives a message comprising the service token from the responding communication device. The message may also indicate the identity of the responding communication device. It should here be noted that the responding communication device may be the communication device to which the service communication device transmitted the service token to or may be a different communication device within the radio access network. The service process is then determined to be performed in the responding communication device. In some examples the returned service token may be considered as a confirmation that the service process has been performed.

In step S84, the service communication device performs the service process of the responding communication device. For example, the service communication device transmits a new version of software which is installed on the responding communication device.

In step S85, the service communication device then determines whether a next communication device has been service processed and sends the service token to a communication device that has not been service processed (step S81). If, however, no more communication devices exist, the service process is considered ended (step S86). For example, when an OSS has finished a software upgrade of a base station, the upgrade token is passed to an appropriate base station that has not yet taken/installed the new software version.

In order to perform the method a service communication device is provided, such as an OSS node, an OAM node, a mobile switching centre (MSC) node, and/or the like.

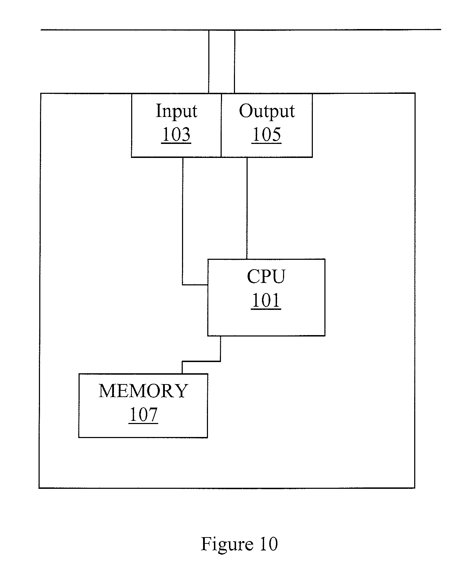

In figure 10, a schematic overview of a service communication device is shown.

The service communication device comprises a control unit 101 arranged to determine to perform/order a service process to be performed on a communication device. The service process requires the communication device to be brought out of operation/into limited operation during the service process. The control unit 101 is further arranged to consider an actual load of at least one communication device within the radio access network. That is, the service process is determined to be performed or not based on an actual load of the communication device to be service processed or a neighbouring communication device. For example, if the actual load of a first communication device is low the service process may be requested. However, if the actual load is medium and the load of the neighbouring communication device is extreme, the token is sent back and no service process will be performed on the first communication device. The control unit 201 then performs the service process of the communication device.

The control unit 101 may be arranged to create and transmit a service token to at least one communication device over a transmission arrangement 105, such as an output interface and/or the like. The service token may comprise an identity of a version being offered, indication of how long the token is valid, service area indication and/or the like. In some examples, the service communication device is arranged to receive the service token from a responding communication device and/or a request to perform the service process of/on the responding communication device over a receiving arrangement 103, such as a receiving network interface and/or the like. The control unit 101 may then be arranged to initiate the service process of the responding communication device when a request is received from the responding communication device. It should here be noted that the responding communication device may or may not be the communication device the service token was sent to.

However, if the service token has been received and no request to initiate the service process has been received the control unit 101 may determine the service token as rejected.

Furthermore, the control unit 101 is arranged to determine whether a communication device has been service processed or not. This information may be stored and retrieved from a memory unit 107 of the service communication device.

In some examples, the memory unit 107 may comprise applications stored thereon to be executed in the control unit 101 in order to perform the method.

The control unit 101 may comprise a CPU, a single processing unit, a plurality of processing units, and or the like.

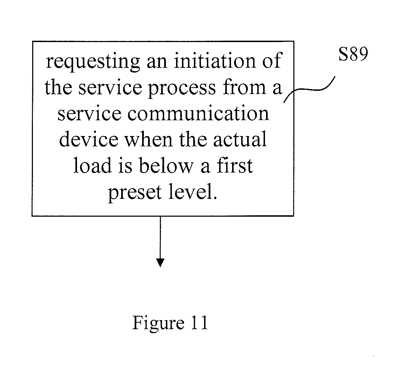

In figure 11, a schematic overview of a method in a communication device is shown. The communication device may comprise a base station, a base station controller, an eNodeB, and/or the like, within a radio access network.

The method is for determining whether to perform a service process of the communication device from a service communication device is disclosed. The service process requires the communication device to be brought out of operation/into limited operation. The communication device determines to perform the service process based on actual load of at least one communication device within the radio access network.

In step S89, the communication device requests an initiation of the service process from the service communication device when the actual load is below a first preset level of the at least one communication device (may be own actual load and/or actual load of a neighbouring communication device). When the service communication device receives the request the service communication device determines to perform the service process from the service communication device on the communication device.

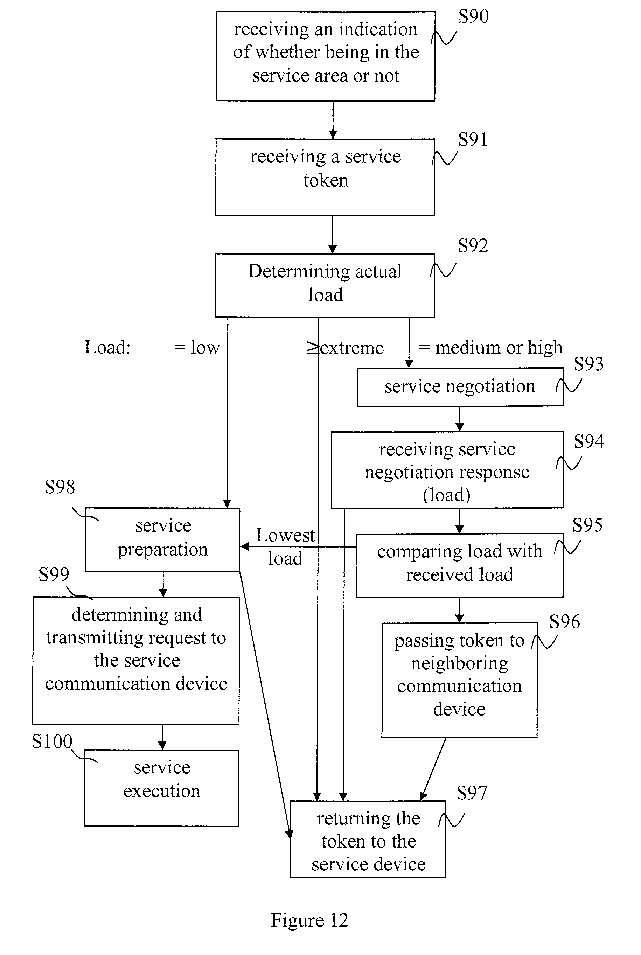

In figure 12, a schematic overview of a method in a communication device is shown. The communication device may comprise a base station, a base station controller, and/or the like, within a radio access network.

The method is for determining whether to perform a service process from a service communication device on the communication device. The service process requires the communication device to be brought out of operation/into limited operation. The determination is based on actual load of at least one communication device within the radio access network and the method comprises to request an initiation of the service process from a service communication device when the actual load is below a first preset level of the at least one communication device.

Further examples are described with reference to figure 12.

In step S90, the communication device receives a broadcasted/multicasted/unicasted message comprising an indication of whether the communication device is in the service area or not. This indication may comprise an indication of a geographical area such as a longitudinal/ latitudinal data; cell IDs and/or the like. Hence, the communication device may determine whether it is within the service area or not.

In step S91, the communication device receives service token from a service communication device/or a different communication device indicating the service process. When the communication device receives the service token, the communication device may start a service preparation and execution, start a service negotiation towards all its neighbouring communication devices or reject the service process. One of these actions may be performed within the time limit that the service communication device has indicated that the service token is valid. The communication device may also request the service process to initiate.

In step S92, the communication device determines actual load of the communication device. The actual load may be classified in a scale, for example, as LOW, MEDIUM, HIGH, EXTREME load. LOW may be determined when connected UEs are below a number that will be easy to redirect or release (inactive UEs), for example, say fifty UEs. MEDIUM may be set to a number of fifty-two hundred connected UEs. HIGH may be set to two hundred to five hundred connected UEs and EXTREME may be set to over five hundred connected UEs.

Then, the communication device with the service token may base the decision on when to start the service preparation and execution or the service negotiation on, for example, the own actual load level.

If the actual load is determined to be LOW the method proceeds to step S98, the communication device determines to initiate the service process from the service communication device based on the determined actual load and transmitting a request to the service communication device.

In step S98, the communication device performs a service preparation such as redirecting/releasing connected user equipment and/or in idle mode.

Service preparation and execution may be started by the communication device through re-directing/releasing subscribers with an appropriate algorithm. There are methods for moving User Equipment UEs from a communication device in a fashion that minimize disturbances to the end users connected to the RBS during a software upgrade. For example, in WCDMA, a Soft Lock function is used by which the output power of the cells is decreased step by step causing the UEs to move to other cells or Radio Access Technologies (RATs).

In step S97, the communication device returns the service token to the service communication device.

In step S99, along with returning the service token, the service process, for example, a new software version, is requested from the service communication device in a request of service when all connected mode UEs have been re-directed/released.

In step S100, the service process is initiated and performed between the communication device and the service communication device. For example, the service communication device transmits a new version in parts or as a complete file with installation data and/or the like. The communication device then executes and installs the received version.

If the actual load is determined to be MEDIUM or HIGH the method proceeds to step S93.

In step S93, the communication device performs a service negation process towards neighbouring communication devices. A communication device may be considered as a neighbouring device to which an inter-node connection has been established, is indicated as a neighbouring device in a neighbouring list, and/or the like. The communication device performs the negation process by sending a negotiation request message to communication devices over inter-node connections. An inter-node connection within the RAN comprises an X2 connection, lur connection and/or the like.

When a neighbouring communication device receives a service negotiation request message it shall reply to the originating communication device with a negotiation response message indicating a (current) actual load level of the neighbouring communication device. The actual load level could take into consideration, for example, number of UEs in connected mode, number of UEs having transferred user plane data during the past 't' seconds, internal component load, processor load, cell load and/or the like. The load may be determined over a period of time in order to avoid getting affected by load spikes and/or the like.

If a neighbouring communication device, that is not part of a service area indicated in the service token, receives a negotiation request the neighbouring communication device may respond with a negotiation response message indicating the load level of the neighbouring communication device and that the neighbouring communication device is not interested in receiving the service token from the communication device that initiated the negotiation process.

If a neighbouring communication device holding a service token receives a negotiation request message from a communication device, the service token may be invalidated and returned to the service communication device (immediately).

In step S94, the communication device receives service negotiation responses from neighbouring communication devices indicating actual load and/or more. A neighbouring communication device under extreme load conditions may decide to reject the negotiation request. This implies that the communication device that initiated the upgrade negotiation returns the token to the service communication device immediately (or to the communication device that sent the service token).

When a neighbouring communication device does not respond to the negotiation request message, a service token may be returned to the service communication device immediately step S97, (or to the RBS that sent the service token), since a non-responsive communication device can not uphold service for the UEs to be re-directed/released during the upgrade preparation and execution.

In step S95, the communication device that initiated the negotiation process has received all expected negotiation response messages, and none of the neighbouring RBSs rejected the upgrade negotiation and compares the actual load indicated in the received negotiation responses. The communication device then determines which of the communication devices taking part in the negotiation process that has the lowest load. If the communication device that initiated the process is determined to have the lowest load, the method follows the steps S98, S97, S99, S100, that is, executing the service process.

In step S96, the communication device determines that the communication device that initiated the upgrade negotiation does not have the lowest actual load (level) but a neighbouring communication device has the lowest actual load. The communication device then passes the service token to the neighbouring communication device with the lowest actual load by sending a pass token request message.

A neighbouring communication device receiving a pass token request message immediately initiates a negotiation process towards all its neighbouring communication devices. At this point, if the neighbouring communication device holding the service token has completed the negotiation process successfully towards all its neighbouring communication devices, the neighbouring communication device (if the service token was received in a pass token request message) sends a pass token response message indicating that the service token has been accepted, and starts preparation and execution of the service process.

In some examples, a communication device that determines that a plurality of communication devices has the same lowest actual load, the communication devices may have a predetermined prioritisation order. For example, the communication device holding the token is determined to be processed first; then the neighbouring communication device that the negotiation request was first sent to, or the neighbouring communication device that responded first and/or the like.

Neither negotiation process nor preparation and execution may be started from the communication device if it has received an EXTREME load message from any of its neighbouring communication devices.

If the communication device receives a pass token response message containing a service token, it may (if its previous upgrade negotiation was successful) initiate upgrade preparation and execution. As an alternative, the communication device may pass the service token in a pass token response message or directly to the service communication device instead of initiating upgrade preparation and execution, for example, if its previous upgrade negotiation was unsuccessful.

If upgrade negotiation is completed unsuccessfully (for example, if one of the neighbouring communication devices rejects the upgrade negotiation), the communication device returns the service token either in the pass token response message or to the service communication device, step S97.

It should be understood that the communication device may decide not to start upgrade negotiation within the specified time; this means that the upgrade token is invalidated and is not to be used by the communication device. For example, the communication may have the option to wait for the right circumstances to occur for some time and not return the token right away. The communication device should however not wait beyond the tokens validity time.

If the actual load is determined to be EXTREME the communication device rejects the token and the method proceeds to step S97.

In step 97, the service token is returned to the service communication device.

Conclusively, the communication devices (nodes) within a RAN are in charge of when they should take a new service (version) from the service communication device. Thus, minimizing traffic disturbances due to service processes in the network

In order to perform the method a communication device is provided.

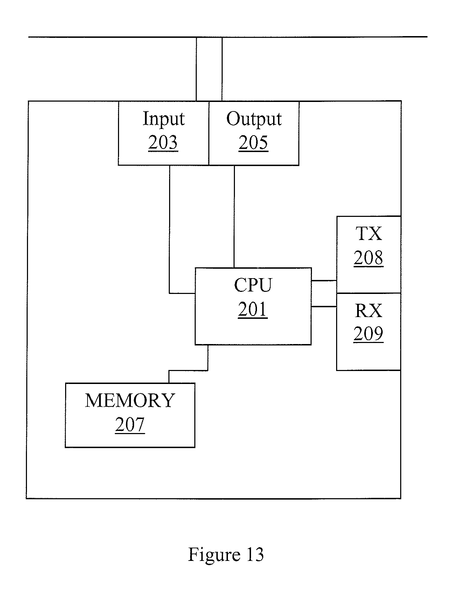

In figure 13, a schematic overview of a communication device 20 is shown. The communication device 20 within a radio access network is arranged to determine whether to perform a service process from a service communication device or not based on actual load of the communication device or a neighbouring communication device. The service process requires that the communication device is brought out of operation/into limited operation. The communication device comprises a control unit 201 requesting an initiation of the service process from a service communication device when the actual load is below a first preset level. The communication device may, for example, comprise a base station, an eNodeB, a radio network controller and/or the like.

The communication device may further comprise a network input arrangement input 203 arranged to receive a service token from the service communication device/or a different communication device indicating the service process. The control unit 201 may then be arranged to determine an actual load of the communication device, and to determine to request the initiation of the service process from the service communication device based on the determined actual load.

In some embodiments, the control unit 201 is arranged to determine the initiation if the actual load in the communication device is below the first preset level and the service token is returned and rejected if the actual load is above a second preset level in the communication device or a neighbouring communication device.

In some examples, the control unit 201 is arranged to request the initiation by performing a negotiation process over a network output 205 of at least one neighbouring communication device wherein information of actual load of the at least one neighbouring communication device is retrieved over the network 203 and compared to the determined actual load of the communication device. The control unit 201 may then request over the network output 205 initiation if the actual load is lower or equal with the retrieved actual load of the at least one neighbouring cell.

In some examples, the control unit 201 is arranged to pass the service token to the at least one neighbouring communication device if the actual load is higher than the retrieved actual load of the at least one neighbouring communication device.

In some examples, the control unit 201 is arranged to return the service token back to the service communication device/or the different communication device over the ouptout network 205 indicating a rejection of the service process if the first communication device receives a rejection of the negotiation process from the at least one neighbouring communication devices.

In some examples, the control unit 201 is further arranged to perform a service process preparation wherein redirecting/releasing subscribers within a cell served by the communication device by for example using Soft Lock. Then the control unit 201 is further arranged to send over the output network 205 the service token back to the service communication device and then to perform the request step.

In some examples, the control unit 201 is further arranged to receive a negotiation request indicating a request to retrieve information of actual load of the communication device from a second communication device over the input network 203. The control unit 201 is then arranged to determine the actual load in the communication device and to respond to the communication device over the output network with a negotiation response, wherein the negotiation response indicates the determined actual load.

In some examples, the control unit 201 is arranged to reject the negotiation request if the determined actual load is exceeding a preset value and, if the determined actual load is equal or below a preset value, to send a negotiation response indicating the determined actual load back to the second communication device over the network output 205.

The control unit 201 may in some examples be arranged to receive a pass token request with a service token from the second communication device and to initiate upgrade negotiation towards at least one neighbouring communication device. If the communication device holding the service token has completed a negotiation process without negotiation rejections towards all its neighbouring the control unit 201 is further arranged to send a pass token response message indicating that the service token is accepted, and to start service process preparation and execution.

In some examples, the communication device communicates with neighbouring communication devices over an internode connection in for example, E-UTRAN such as an X2 connection.

The control unit 201 may comprise a CPU, a single processing unit, a plurality of processing units, and or the like.

In some examples, the communication device comprises a memory unit 207 wherein applications to be executed in the control unit in order to perform the method may be stored, and/or data concerning the communication device such as load data and/or the like.

The memory unit 207 may comprise a single memory unit, a plurality of memory units, external and/or internal memory units.

In some examples, the communication device comprises a transmitting arrangement 208 and a receiving arrangement 209 for communicating with user equipment within a cell of the communication device. Information from this communication may be used to determine the actual load in the communication device.

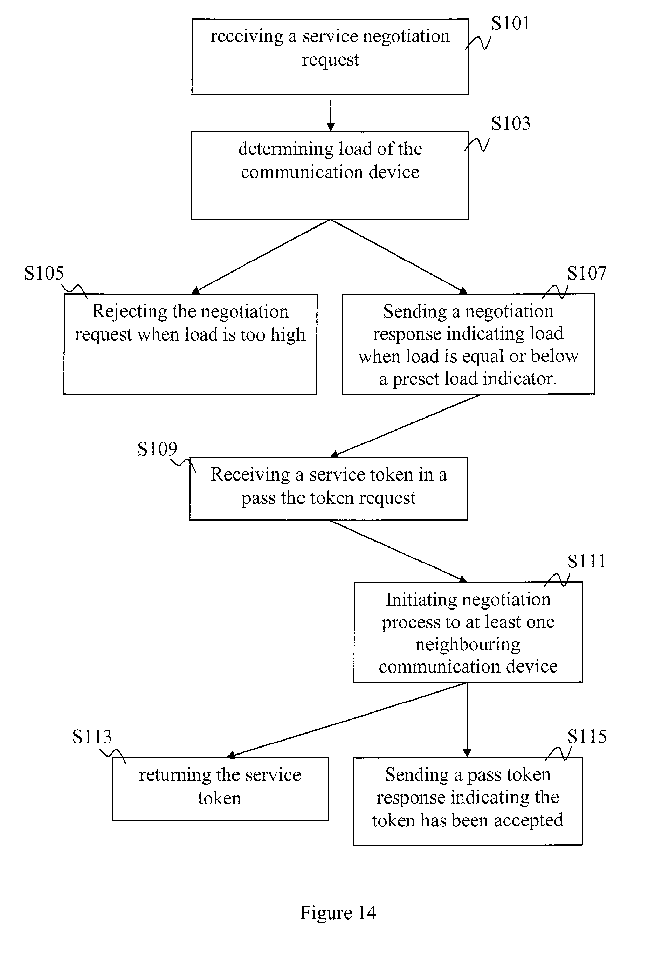

In figure 14, a schematic flowchart of a method in a neighbouring communication device within a radio access network is shown.

In step S101, the neighbouring communication device receives a service negotiation request from a communication device over an internode connection such as an X2 connection.

In step S103, the neighbouring communication device determines the actual load of the neighbouring communication device.

In step S105, the neighbouring communication device has determined that the actual load is too high, for example, an EXTREME (or HIGH) load, and rejects the negotiation request.

In step S107, the neighbouring communication device sends a negotiation response indicating actual load when actual load is equal or below a preset load indicator, for example, LOW-MEDIUM, or HIGH.

In step S109, the neighbouring communication device receives a service token in a pass the token request from the communication device.

In step S111, the neighbouring communication device initiates a negotiation process to at least one communication device with a neighbour relation to the neighbouring communication device.

In step S113, the neighbouring communication device returns the service token to the communication device if the negotiation process is rejected/a non response is received in the negotiation process.

In step S115, the neighbouring communication device sends a pass token response indicating the token has been accepted if the negotiation process is successful.

Hence, the neighbouring communication device has received the service token and may request the service process to be initiated from a service communication device of the service process.

Examples are described with reference to block diagrams and/or flowchart illustrations of methods, apparatus (systems). It is understood that several blocks of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the block diagrams and/or flowchart block or blocks.

The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the block diagrams and/or flowchart block or blocks..

In some implementations, the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved.

In the drawings and specification, there have been disclosed exemplary embodiments of the invention. However, many variations and modifications can be made to these embodiments without substantially departing from the principles of the present invention. Accordingly, although specific terms are employed, they are used in a generic and descriptive sense only and not for purposes of limitation, the scope of the invention being defined by the following claims.

## Claims

1. A method in a service communication device comprising an Operations Support System, OSS, or an Operation and Maintenance, OAM, system, for performing a service process in a Radio Base Station, RBS, within a radio access network requiring that the RBS is brought out of operation/into limited operation, the OSS or OAM having a predetermined upgrade area comprising an area with a number of RBSs in which the service process is to be performed, the method comprising the step of
- receiving information pertaining to at least one neighbouring RBS within the radio access network indicating an actual load of at least one neighbouring RBS,
- determining (S70) to perform the service process of the RBS within the radio access network based on the actual load of at least one neighbouring RBS within the radio access network, and
- performing (S84) the service process of the RBS.

2. A method according to claim 1, wherein determining to perform the service process comprises the steps of:
- sending (S81) a service token to at least one RBS within the radio access network,
- receiving (S83) the service token from a responding RBS and/or a request to perform the service process in the responding RBS, and wherein the service process is determined to be performed in the responding RBS when a request is received from the responding RBS, and wherein the step of performing (S84) the service process is performed of the responding RBS.

3. A method according to claim 2, further comprising a step of determining (S85) whether a RBS has been service processed and sending the service token to a RBS that has not been service processed.

4. A method according to any of claims 2-3, wherein the service token is accompanied with an identity of a version being offered and/or indication of how long the token is valid.

5. A method according to any of claims 2-4, wherein the responding RBS comprises the at least one neighbouring RBS.

6. A method according to any of claims 2-5, wherein the responding RBS comprises a different RBS than the at least one neighbouring RBS.

7. A method according to any of the claims 2-6, wherein the service communication device determines a received service token without being accompanied with the request to perform the service request as a rejection of the service process.

8. A method according to any of the claims 1-7, wherein the actual load of at least one neighbouring RBS that the step of determining to perform the service process is based on, comprises the actual load of one neighbouring RBS in a determined service process area.

9. A method in a Radio Base Station, RBS, within a radio access network comprising:
determining whether to perform a service process of the RBS from a service communication device comprising an Operations Support System, OSS, or an Operation and Maintenance, OAM, system, based on actual load of at least one neighbouring RBS within the radio access network; the service process requiring the RBS to be brought out of operation/into limited operation; and
requesting (S89) an initiation of the service process from a service communication device when the actual load is below a first preset level.

10. A method according to claim 9, further comprising the steps of:
- receiving (S91) a service token from the service communication device/or a different RBS indicating the service process,
- determining (S92) the actual load of the RBS, and
- determining to request the initiation of the service process from the service communication device based on the determined actual load and transmitting (S99) the request to the OSS or OAM.

11. A method according to claim 10, wherein the initiation is determined if the actual load in the RBS is below the first preset level and the service token is returned and rejected if the actual load is above a second preset level in the RBS or a neighbouring RBS.

12. A method according to any of claims 10-11, wherein the determining step of requesting the initiation comprises the step of performing (S93) a negotiation process of at least one neighbouring RBS wherein information of actual load of the at least one neighbouring RBS is retrieved (S94) and compared (S95) to the determined actual load of the RBS and the initiation is requested if the actual load is lower or equal with the retrieved actual load of the at least one neighbouring cell.

13. A method according to claim 12, wherein the service token is passed (S96) to the at least one neighbouring RBS if the actual load is higher than the retrieved actual load of the at least one neighbouring RBS.

14. A method according to claim 12, wherein the service token is returned back to the OSS or OAM /or the different RBS indicating a rejection of the service process if the first RBS receives a rejection of the negotiation process from the at least one neighbouring RBSs.

15. A method according to any of claims 10-12, further comprising the steps of:
- performing (S98) service process preparation wherein redirecting/releasing subscribers within a cell served by the RBS,
- sending the service token back to the OSS or OAM and then performing the request step.

16. A method according to any of claims 9-15, further comprising the steps of:
- receiving a negotiation request indicating a request to retrieve information of actual load of the RBS from a second RBS,
- determining the actual load in the RBS,
- responding to the negotiation request indicating the determined actual load.

17. A method according to claim 16, wherein the responding step comprises rejecting the negotiation request if the determined actual load is exceeding a preset value and sending a negotiation response indicating the determined actual load if the determined actual load is equal or below a preset value back to the second RBS.

18. A method according to any of claims 16-17, further comprising the step of receiving a pass token request with a service token from the second RBS and initiating upgrade negotiation towards at least one neighbouring base station and, if the base station holding the service token has completed a negotiation process without negotiation rejections towards all its neighbouring, send a pass token response message indicating that the service token is accepted, and start service process preparation and execution.

19. A method according to any of the claims 9-18, wherein the RBS communicates with neighbouring RBSs over an X2 connection.

20. A service communication device (10) comprising an Operations Support System, OSS, or an Operation and Maintenance, OAM, system having a predetermined upgrade area comprising an area with a number of RBSs in which a service process is to be performed, comprising a control unit (101) arranged to perform the service process of a RBS within a radio access network; the service process requiring the RBS to be brought out of operation/into limited operation during the service process, **characterised in that** the service communication device (10) is arranged to receive information pertaining to at least one neighbouring RBS within the radio access network indicating an actual load of at least one neighbouring RBS and the control unit (101) is arranged to determine and perform the service process in the RBS based on the actual load of at least one neighbouring RBS within the radio access network.

21. A Radio Base Station, RBS, (20) comprising a control unit (201) arranged to determine whether to perform a service process of the RBS from a service communication device comprising an Operations Support System, OSS, or an Operation and Maintenance, OAM, system; the service process requiring the RBS to be brought out of operation/into limited operation, **characterised in that** the control unit (201) is arranged to base the determination on actual load of at least one neighbouring RBS within a radio access network and to request an initiation of the service process from a service communication device when the actual load is below a first preset level.

## Patentansprüche

1. Verfahren in einer Dienst-Kommunikationsvorrichtung, umfassend ein Betriebsunterstützungssystem, OSS, oder ein Betriebs- und Wartungssystem, OAM-System, zur Durchführung eines Dienstprozesses in einer Funkbasisstation, RBS, innerhalb eines Funkzugangsnetzes, wobei es erforderlich ist, dass die RBS abgeschaltet bzw. eingeschränkt eingeschaltet wird, wobei das OSS oder OAM einen vorbestimmten Upgrade-Bereich hat, der einen Bereich mit einer Anzahl von RBS umfasst, in denen der Dienstprozess durchzuführen ist, wobei das Verfahren den folgenden Schritt umfasst:
- Empfangen von Information, die sich auf mindestens eine benachbarte RBS innerhalb des Funkzugangsnetzes bezieht und eine tatsächliche Last mindestens einer benachbarten RBS anzeigt,
- Bestimmen (S70) der Durchführung des Dienstprozesses der RBS innerhalb des Funkzugangsnetzes je nach der tatsächlichen Last mindestens einer benachbarten RBS innerhalb des Funkzugangsnetzes und
- Durchführen (S84) des Dienstprozesses der RBS.

2. Verfahren nach Anspruch 1, wobei das Bestimmen der Durchführung des Dienstprozesses die folgenden Schritte umfasst:
- Senden (S81) eines Dienst-Tokens an mindestens eine RBS innerhalb des Funkzugangsnetzes,
- Empfangen (S83) des Dienst-Tokens von einer antwortenden RBS und/oder einer Anforderung zur Durchführung des Dienstprozesses in der antwortenden RBS, und wobei bestimmt wird, dass der Dienstprozess in der antwortenden RBS durchgeführt wird, wenn eine Anforderung von der antwortenden RBS empfangen wird, und wobei der Schritt des Durchführens (S84) des Dienstprozesses in der antwortenden RBS durchgeführt wird.

3. Verfahren nach Anspruch 2, ferner umfassend folgenden Schritt: Bestimmen (S85), ob eine RBS einem Dienstprozess unterzogen worden ist, und Senden des Dienst-Tokens an eine RBS, die nicht einem Dienstprozess unterzogen worden ist.

4. Verfahren nach einem der Ansprüche 2 bis 3, wobei das Dienst-Token begleitet wird von einer Kennung einer angebotenen Version und/oder einer Angabe, wie lange das Token gültig ist.

5. Verfahren nach einem der Ansprüche 2 bis 4, wobei die antwortende RBS die mindestens eine benachbarte RBS umfasst.

6. Verfahren nach einem der Ansprüche 2 bis 5, wobei die antwortende RBS eine andere RBS als die mindestens eine benachbarte RBS umfasst.

7. Verfahren nach einem der Ansprüche 2 bis 6, wobei die Dienst-Kommunikationsvorrichtung ein empfangenes Dienst-Token, wenn es nicht von der Anforderung der Durchführung der Dienstanforderung begleitet wird, als Abweisung des Dienstprozesses bestimmt.

8. Verfahren nach einem der Ansprüche 1 bis 7, wobei die tatsächliche Last mindestens einer benachbarten RBS, nach der sich der Schritt des Bestimmens der Durchführung des Dienstprozesses richtet, die tatsächliche Last einer benachbarten RBS in einem bestimmten Dienstprozessbereich umfasst.

9. Verfahren in einer Funkbasisstation, RBS, innerhalb eines Funkzugangsnetzes, umfassend:
Bestimmen, ob ein Dienstprozess der RBS von einer Dienst-Kommunikationsvorrichtung, die ein Betriebsunterstützungssystem, OSS, oder ein Betriebs- und Wartungssystem, OAM-System, umfasst, je nach einer tatsächlichen Last mindestens einer benachbarten RBS innerhalb des Funkzugangsnetzes durchzuführen ist; wobei der Dienstprozess erfordert, dass die RBS abgeschaltet bzw. eingeschränkt eingeschaltet wird; und
Anfordern (S89) einer Einleitung des Dienstprozesses von einer Dienst-Kommunikationsvorrichtung, wenn die tatsächliche Last unter einem ersten vorgegebenen Pegel liegt.

10. Verfahren nach Anspruch 9, ferner umfassend die folgenden Schritte:
- Empfangen (S91) eines Dienst-Tokens von der Dienst-Kommunikationvorrichtung bzw. einer anderen RBS, das den Dienstprozess anzeigt,
- Bestimmen (S92) der tatsächlichen Last der RBS und
- Bestimmen der Anforderung der Einleitung des Dienstprozesses von der Dienstkommunikationsvorrichtung je nach der bestimmten tatsächlichen Last und Übertragen (S99) der Anforderung an die OSS oder OAM.

11. Verfahren nach Anspruch 10, wobei die Einleitung bestimmt wird, wenn die tatsächliche Last in der RBS unter dem ersten vorgegebenen Pegel liegt und das Dienst-Token zurückgesendet und abgewiesen wird, wenn die tatsächliche Last über einem zweiten vorgegebenen Pegel in der RBS oder einer benachbarten RBS liegt.

12. Verfahren nach einem der Ansprüche 10 bis 11, wobei der Schritt des Bestimmens der Anforderung der Einleitung den folgenden Schritt umfasst: Durchführen (S93) eines Aushandlungsprozesses mindestens einer benachbarten RBS, wobei Information über eine tatsächliche Last der mindestens einen benachbarten RBS abgerufen (S94) und mit der bestimmten tatsächlichen Last der RBS verglichen (S95) wird und die Einleitung angefordert wird, wenn die tatsächliche Last kleiner oder gleich der abgerufenen tatsächlichen Last der mindestens einen benachbarten Zelle ist.

13. Verfahren nach Anspruch 12, wobei das Dienst-Token an die mindestens eine benachbarte RBS weitergesendet (S96) wird, wenn die tatsächliche Last größer ist als die abgerufene tatsächliche Last der mindestens einen benachbarten RBS.

14. Verfahren nach Anspruch 12, wobei das Dienst-Token an die OSS oder OAM bzw. an die andere RBS zurückgesendet wird, das eine Abweisung des Dienstprozesses anzeigt, wenn die erste RBS eine Abweisung des Aushandlungsprozesses von der mindestens einen benachbarten RBS empfängt.

15. Verfahren nach einem der Ansprüche 10 bis 12, ferner umfassend die folgenden Schritte:
- Durchführen (S98) einer Dienstprozessvorbereitung, wobei Umleiten/Freigeben von Teilnehmern innerhalb einer durch die RBS versorgten Zelle erfolgt,
- Zurücksenden des Dienst-Tokens an die OSS oder OAM und anschließendes Durchführen des Anforderungsschritts.

16. Verfahren nach einem der Ansprüche 9 bis 15, ferner umfassend die folgenden Schritte:
- Empfangen einer Aushandlungsanforderung, die eine Anforderung zum Abrufen von Information über eine tatsächliche Last der RBS anzeigt, von einer zweiten RBS.
- Bestimmen der tatsächlichen Last in der RBS,
- Antworten auf die Aushandlungsanforderung, die die bestimmte tatsächliche Last anzeigt.

17. Verfahren nach Anspruch 16, wobei der Antwortschritt umfasst: Ablehnen der Aushandlungsanforderung, wenn die bestimmte tatsächliche Last einen vorgegebenen Wert überschreitet, und Zurücksenden einer Aushandlungsantwort, die die bestimmte tatsächliche Last anzeigt, wenn die bestimmte tatsächliche Last gleich oder kleiner ist als ein vorgegebener Wert, an die zweite RBS.

18. Verfahren nach einem der Ansprüche 16 bis 17, ferner umfassend den folgenden Schritt: Empfangen einer Pass-Token-Anforderung mit einem Dienst-Token von der zweiten RBS und Einleiten einer Upgrade-Aushandlung gegen mindestens eine benachbarte Basisstation, und wenn die Basisstation, die das Dienst-Token hält, einen Aushandlungsprozess ohne Aushandlungsabweisungen gegen alle ihre Nachbarn abgeschlossen hat, Senden einer Pass-Token-Antwortnachricht, die anzeigt, dass das Dienst-Token angenommen ist, und Starten einer Dienstprozessvorbereitung und -ausführung.

19. Verfahren nach einem der Ansprüche 9 bis 18, wobei die RBS mit benachbarten RBS über eine X2-Verbindung kommuniziert.

20. Dienst-Kommunikationsvorrichtung (10), umfassend ein Betriebsunterstützungssystem, OSS, oder ein Betriebs- und Wartungssystem, OAM-System, mit einem vorbestimmten Upgrade-Bereich, der einen Bereich mit einer Anzahl von RBS umfasst, in denen der Dienstprozess durchzuführen ist, umfassend eine Steuereinheit (101), die dafür eingerichtet ist, den Dienstprozess einer RBS innerhalb eines Funkzugangsnetzes durchzuführen; wobei der Dienstprozess erfordert, dass die RBS während des Dienstprozesses abgeschaltet bzw. eingeschränkt eingeschaltet wird, **dadurch gekennzeichnet, dass** die Dienst-Kommunikationsvorrichtung (10) dafür eingerichtet ist, Information zu empfangen, die sich auf mindestens eine benachbarte RBS innerhalb des Funkzugangsnetzes bezieht und eine tatsächliche Last mindestens einer benachbarten RBS anzeigt, und die Steuereinheit (101) dafür eingerichtet ist, den Dienstprozess in der RBS je nach der tatsächlichen Last der mindestens einen benachbarten RBS innerhalb des Funkzugangsnetzes zu bestimmen und durchzuführen.

21. Funkbasisstation, RBS, (20), umfassend eine Steuereinheit (201), die dafür eingerichtet ist, zu bestimmen, ob ein Dienstprozess der RBS von einer Dienst-Kommunikationsvorrichtung auszuführen ist, die ein Betriebsunterstützungssystem, OSS, oder ein Betriebs- und Wartungssystem, OAM-System, umfasst; wobei der Dienstprozess erfordert, dass die RBS abgeschaltet bzw. eingeschränkt eingeschaltet wird, **dadurch gekennzeichnet, dass** die Steuereinheit (201) dafür eingerichtet ist, die Bestimmung nach der tatsächlichen Last mindestens einer benachbarten RBS innerhalb eines Funkzugangsnetzes zu richten und eine Einleitung des Dienstprozesses von einer Dienst-Kommunikationsvorrichtung anzufordern, wenn die tatsächliche Last unter einem ersten vorgegebenen Pegel liegt.

## Revendications

1. Procédé mis en oeuvre dans un dispositif de communication de service comprenant un système de soutien opérationnel, OSS, ou un système d'exploitation et maintenance, OAM, pour mettre en oeuvre un processus de service dans une station de base radio, RBS, au sein d'un réseau d'accès radio nécessitant que la station RBS soit mise hors fonctionnement / en fonctionnement limité, le système OSS ou le système OAM présentant une zone de mise à niveau prédéterminée comprenant une zone disposant d'un nombre de stations RBS dans lesquelles le processus de service doit être mis en oeuvre, le procédé comprenant l'étape ci-dessous consistant à :
- recevoir des informations connexes à au moins une station RBS voisine au sein du réseau d'accès radio, indiquant une charge effective de ladite au moins une station RBS voisine ;
- déterminer (S70) s'il convient de mettre en oeuvre le processus de service de la station RBS au sein du réseau d'accès radio, sur la base de la charge effective d'au moins une station RBS voisine au sein du réseau d'accès radio ; et
- mettre en oeuvre (S84) le processus de service de la station RBS.

2. Procédé selon la revendication 1, dans lequel l'étape consistant à déterminer s'il convient de mettre en oeuvre le processus de service comprend les étapes ci-dessous consistant à :
- envoyer (S81) un jeton de service à au moins une station RBS au sein du réseau d'accès radio ;
- recevoir (S83) le jeton de service à partir d'une station RBS répondante et/ou une demande de mise en oeuvre du processus de service dans la station RBS répondante, et dans lequel le processus de service est déterminé comme étant à mettre en oeuvre dans la station RBS répondante lorsqu'une demande est reçue à partir de la station RBS répondante, et dans lequel l'étape de mise en oeuvre (S84) du processus de service est mise en oeuvre dans la station RBS répondante.

3. Procédé selon la revendication 2, comprenant en outre une étape consistant à déterminer (S85) si une station RBS a fait l'objet d'un processus de service et à envoyer le jeton de service à une station RBS qui n'a pas fait l'objet d'un processus de service.

4. Procédé selon l'une quelconque des revendications 2 à 3, dans lequel le jeton de service est accompagné d'une identité d'une version offerte et/ou d'une indication de la durée de validité du jeton.

5. Procédé selon l'une quelconque des revendications 2 à 4, dans lequel la station RBS répondante comprend ladite au moins une station RBS voisine.

6. Procédé selon l'une quelconque des revendications 2 à 5, dans lequel la station RBS répondante comprend une station RBS distincte de ladite au moins une station RBS voisine.

7. Procédé selon l'une quelconque des revendications 2 à 6, dans lequel le dispositif de communication de service détermine un jeton de service reçu sans être accompagné de la demande pour mettre en oeuvre la demande de service comme étant un rejet du processus de service.

8. Procédé selon l'une quelconque des revendications 1 à 7, dans lequel la charge effective d'au moins une station RBS voisine sur laquelle se base l'étape consistant à déterminer s'il convient de mettre en oeuvre le processus de service, comprend la charge effective d'une station RBS voisine dans une zone de processus de service déterminée.

9. Procédé mis en oeuvre dans une station de base radio, RBS, au sein d'un réseau d'accès radio, comprenant les étapes ci-dessous consistant à :
déterminer s'il convient de mettre en oeuvre un processus de service de la station RBS à partir d'un dispositif de communication de service comprenant un système de soutien opérationnel, OSS, ou un système d'exploitation et maintenance, OAM, sur la base de la charge effective d'au moins une station RBS voisine au sein du réseau d'accès radio ; le processus de service nécessitant que la station RBS soit mise hors fonctionnement / en fonctionnement limité ; et
demander (S89) une initiation du processus de service à partir d'un dispositif de communication de service lorsque la charge effective est inférieure à un premier niveau prédéfini.

10. Procédé selon la revendication 9, comprenant en outre les étapes ci-dessous consistant à :
- recevoir (S91) un jeton de service à partir du dispositif de communication de service ou d'une station RBS distincte indiquant le processus de service ;
- déterminer (S92) la charge effective de la station RBS ; et
- déterminer s'il convient de demander l'initiation du processus de service à partir du dispositif de communication de service, sur la base de la charge effective déterminée, et transmettre (S99) la demande au système OSS ou au système OAM.

11. Procédé selon la revendication 10, dans lequel l'initiation est déterminée si la charge effective dans la station RBS est inférieure au premier niveau prédéfini, et le jeton de service est renvoyé et rejeté si la charge effective est supérieure à un second niveau prédéfini dans la station RBS ou une station RBS voisine.

12. Procédé selon l'une quelconque des revendications 10 à 11, dans lequel l'étape de détermination consistant à demander l'initiation comprend l'étape consistant à mettre en oeuvre (S93) un processus de négociation d'au moins une station RBS voisine, dans lequel des informations de charge effective de ladite au moins une station RBS voisine sont extraites (S94) et comparées (S95) à la charge effective déterminée de la station RBS, et l'initiation est demandée si la charge effective est inférieure ou égale à la charge effective extraite de ladite au moins une cellule voisine.

13. Procédé selon la revendication 12, dans lequel le jeton de service est passé (S96) à ladite au moins une station RBS voisine si la charge effective est supérieure à la charge effective extraite de ladite au moins une station RBS voisine.

14. Procédé selon la revendication 12, dans lequel le jeton de service est renvoyé au système OSS ou au système OAM, ou à la station RBS distincte indiquant un rejet du processus de service, si la première station RBS reçoit un rejet du processus de négociation en provenance de ladite au moins une station RBS voisine.

15. Procédé selon l'une quelconque des revendications 10 à 12, comprenant en outre les étapes ci-dessous consistant à :
- mettre en oeuvre (S98) une préparation de processus de service, dans lequel la redirection / libération des abonnés se fait au sein d'une cellule desservie par la station RBS;
- renvoyer le jeton de service au système OSS ou au système OAM et mettre ensuite en oeuvre l'étape de demande.

16. Procédé selon l'une quelconque des revendications 9 à 15, comprenant en outre les étapes ci-dessous consistant à :
- recevoir une demande de négociation indiquant une demande visant à extraire des informations de charge effective de la station RBS à partir d'une seconde station RBS ;
- déterminer la charge effective dans la station RBS ;
- répondre à la demande de négociation indiquant la charge effective déterminée.

17. Procédé selon la revendication 16, dans lequel l'étape de réponse comprend l'étape consistant à rejeter la demande de négociation si la charge effective déterminée est supérieure à une valeur prédéfinie, et l'étape consistant à envoyer une réponse de négociation, indiquant la charge effective déterminée, si la charge effective déterminée est égale ou inférieure à une valeur prédéfinie, à la seconde station RBS.

18. Procédé selon l'une quelconque des revendications 16 à 17, comprenant en outre les étapes consistant à recevoir une demande de passage de jeton avec un jeton de service à partir de la seconde station RBS, et à initier une négociation de mise à niveau vers au moins une station de base voisine et, si la station de base détenant le jeton de service a terminé un processus de négociation sans rejets de négociation vers toutes ses stations voisines, à envoyer un message de réponse de passage de jeton indiquant que le jeton de service est accepté, et à initier une préparation et une exécution de processus de service.

19. Procédé selon l'une quelconque des revendications 9 à 18, dans lequel la station RBS communique avec des stations RBS voisines sur une connexion X2.

20. Dispositif de communication de service (10) comprenant un système de soutien opérationnel, OSS, ou un système d'exploitation et maintenance, OAM, présentant une zone de mise à niveau prédéterminée comprenant une zone avec un nombre de stations RBS dans lesquelles un processus de service doit être mis en oeuvre, comprenant une unité de commande (101) agencée de manière à mettre en oeuvre le processus de service d'une station RBS au sein d'un réseau d'accès radio ; le processus de service nécessitant que la station RBS soit mise hors fonctionnement / en fonctionnement limité au cours du processus de service, **caractérisé en ce que** le dispositif de communication de service (10) est agencé de manière à recevoir des informations connexes à au moins une station RBS voisine au sein du réseau d'accès radio, indiquant une charge effective d'au moins une station RBS voisine, et l'unité de commande (101) est agencée de manière à déterminer et à mettre en oeuvre le processus de service dans la station RBS, sur la base de la charge effective d'au moins une station RBS voisine au sein du réseau d'accès radio.

21. Station de base radio, RBS, (20) comprenant une unité de commande (201) agencée de manière à déterminer s'il convient de mettre en oeuvre un processus de service de la station RBS à partir d'un dispositif de communication de service comprenant un système de soutien opérationnel, OSS, ou un système d'exploitation et maintenance, OAM ; le processus de service nécessitant que la station RBS soit mise hors fonctionnement / en fonctionnement limité, **caractérisé en ce que** l'unité de commande (201) est agencée de manière à baser la détermination sur la charge effective d'au moins une station RBS voisine au sein d'un réseau d'accès radio et à demander une initiation du processus de service à partir d'un dispositif de communication de service lorsque la charge effective est inférieure à un premier niveau prédéfini.
